# EUROPEAN PATENT APPLICATION

(11) **EP 3 672 261 A1**
(43) Date of publication of application: **24.06.2020**
(21) Application number: 19152607.8
(22) Date of filing: 18.01.2019
(51) Int. Cl.: H04N 21/41, H04N 21/4363, H04L 29/06

(54) **WIRELESS AUDIOVISUAL INFORMATION SHARING SYSTEM AND METHOD**

(30) Priority: 22.12.2018 TW 10746694
(71) Applicant: NetKlass Technology Inc., Chupei City, Hsinchu County 302 (TW)
(72) Inventor: Lee, Ming Tang, 302 Chupei City Hsinchu County 302 (TW)
(74) Representative: Gee, Steven William

(57) **Abstract**

The invention provides a wireless audiovisual information sharing system and method, applicable to a conference environment, wherein a user uses gesture touch to operate a user device at the at least one user end to perform device operation, and if the information receiving device of the information receiving end receives operation information of a user device of the at least one user end, the audiovisual signal outputted by the user device is decompressed and outputted until the operation information of another user device of the at least one user end is received and then the information receiving device decompresses and outputs the audiovisual signal outputted by the another user device, so that the users can share the wireless audiovisual information with each other through touch control.

## Description

### CROSS-REFERENCE TO RELATED APPLICATION

The present application is based on, and claims priority form, Taiwan Patent Application No. 107146694, filed DEC. 22, 2018, the disclosure of which is hereby incorporated by reference herein in its entirety.

### TECHNICAL FIELD

The technical field generally relates to a wireless audiovisual (AV) system and method, and in particular, to a wireless audiovisual information sharing system and method applicable to a conference environment, wherein a user uses gesture touch to operate a user device at the at least one user end to perform device operation, and if the information receiving device of the information receiving end receives operation information of a user device of the at least one user end, the audiovisual signal outputted by the user device is decompressed and outputted until the operation information of another user device of the at least one user end is received, so that the users can share the wireless audiovisual information with each other through touch control.

### BACKGROUND

With the popularity of wireless transmission, the wireless audiovisual transmission has improved the convenience of audiovisual transmission. However, since the device can only be controlled by physical buttons in the past, the use of the physical buttons causes limitations on the design of the device appearances. Moreover, the use of physical buttons also limits the variety and convenience of manipulation and control, so the user needs to spend time learning the manipulation and control.

At present, when a plurality of audiovisual transmission devices is used, it is necessary to download the software and then execute the functions of the audiovisual transmission device. In particular, most companies now rely on certified software to download for reasons that protect the company's internal trade secrets. Therefore, the way of download-and-execute design causes the user inconveniences, and does not meet the basic requirements of speediness and convenience.

### SUMMARY

The object of the present invention is to provide a wireless audiovisual information sharing system and method applicable to a conference environment, wherein for each user device of at least one user end, a user uses gesture touch to operate a user device at the at least one user end to perform device operation, and if the information receiving device of the information receiving end receives operation information of a user device of the at least one user end, the audiovisual signal outputted by the user device is decompressed and outputted to a display device for displaying until the operation information of another user device of the at least one user end is received.

Another object of the present invention is to provide a wireless audiovisual information sharing system and method applicable to a conference environment. When the wireless audiovisual information sharing system of the present invention is used to perform a wireless audiovisual sharing method, the first step is to perform a startup operation to confirm each user device of at least one user end is connected to an information receiving device at an information receiving end for performing audiovisual signal transmission, wherein the audiovisual signal is a compression-encoded packet image signal; and then, an operation is performed on each user device of the at least one user end, a user can use gesture touch to control each user devices of the at least one user end for device operation; and then, the audiovisual displaying is performed, the information receiving device of the information receiving end can receive the audiovisual signal outputted by each user device from the at least one user end in a wireless manner, wherein if the information receiving device of the information receiving end receives an operation information of a user device of the at least one user end, the information receiving device decompresses the audiovisual signal outputted by the user device, and transmits the decompressed audiovisual signal to a display device for displaying, until receiving an operation information from another user device of the at least one user end and performing decompression on the audiovisual signals outputted by the another user device and transmitting the decompressed audiovisual signal to the display device for displaying, so that the users can share wireless audiovisual information by touch control.

The wireless audiovisual information sharing system of the present invention allows the user to operate and control by gesture touch to enhance user experience, such as, interaction in a conference presentation.

To achieve the above object, the present invention provides a wireless audiovisual information sharing system, comprising: at least one user device, each user device receiving an audiovisual signal in compliance with at least one of HDMI and USB interfaces, and outputting the audiovisual signal in compliance with a wireless transmission protocol, such as an IEEE 802.11 communication protocol; and an information receiving device, to receive the audiovisual signals outputted by each user device, and selectively outputting the audiovisual signal from a user device in compliance with HDMI and USB interfaces to a display device; wherein each user device first paired with the information receiving device to select a transmission channel and the information receiving device detecting display coefficients of the display device and transmitting the display coefficients of the display device to each user device; and each user device adjusting compression ratio and frame rate of the audiovisual signal according to the display coefficients and transmission mode of the audiovisual signal to output the audiovisual signal.

The user device comprises a gesture touch/sensing control module, an audiovisual receiving module, an image compression/packetization module, and a wireless transmission module; the gesture touch/sensing control module senses user's gesture touch to perform operation, such as, start/stop, pause/resume, menu, exit menu, and so on, on the user device.

Audiovisual receiving module: the audiovisual receiving module cooperates with the gesture touch/sensing control module, so that the user device can perform operations, such as, start/stop, pause/resume, menu, exit menu, and so on, and receives an audiovisual signal in compliance with at least one of HDMI and USB interfaces, and transmits the audiovisual signal to the image compression/packetization module.

Image compression/packetization module: after receiving the audiovisual signal from the audiovisual receiving module, the image compression/packetization module performs compression and encoding on the audiovisual signal; the image compression/packetization module transmits the compressed encoded audiovisual signal to the wireless transmission module.

Wireless transmission module: the wireless transmission module transmits the compressed and encoded audiovisual signal in packets in accordance with the IEEE 802.11 protocol to the information receiving device.

The information receiving device comprises a wireless receiving module, a packet processing/image decompression module, and an audiovisual output module.

Wireless receiving module: the wireless receiving module of the information receiving device receives the audiovisual signal in compressed and encoded packets in compliance with, for example, the IEEE 802.11 communication protocol, and transmits the received audiovisual signal to the packet processing/image decompression module.

Packet processing/image decompression module: the packet processing/image decompression module performs packet processing on the received audiovisual signal, performs decompression on the audiovisual signals, and transmits the processed audiovisual signal to the audiovisual output module.

Audiovisual output module: the audiovisual output module outputs the audiovisual signal in compliance with at least one of HDMI and USB interfaces to the display device.

Herein, the wireless transmission architecture of the user device and the information receiving device is, for example, an 802.11 type.

Moreover, depending on the actual application, the information receiving device can be configured to comprise an audio module of audio out and an HDMI switch module able to accept an external image source.

When the wireless audiovisual information sharing system of the present invention is used to perform the wireless audiovisual sharing method, the first step is to perform an activation operation to confirm that each user device of the at least one user end is connected to an information receiving device of an information receiving end for performing audiovisual signals transmitting, wherein the audiovisual signal is a compression-encoded packet image signal; then, performing an operation with gesture touch, an operation is performed on each user device of the at least one user end, a user can use gesture touch to control each user device of the at least one user end to perform device operation; and then, the audiovisual displaying is performed, the information receiving device of the information receiving end can receive the audiovisual signal outputted by each user device from the at least one user end in a wireless manner, wherein if the information receiving device of the information receiving end receives an operation information of a user device of the at least one user end, the information receiving device decompresses the audiovisual signal outputted by the user device of the user end, and transmits the decompressed audiovisual signal to a display device for displaying until the information receiving device receives an operation information from another user device of the at least one user end and then performs decompression on the audiovisual signals outputted by the another user device and transmits the decompressed audiovisual signal to the display device for displaying, so that the users can share wireless audiovisual information by touch control.

Moreover, the audiovisual signal is an audio, image or an audiovisual program.

The many-to-one wireless audiovisual transmission technology of the present invention can use gesture touch to manipulate and control the devices so as to enhance user experience, such as, interaction in conference presentation.

The foregoing will become better understood from a careful reading of a detailed description provided herein below with appropriate reference to the accompanying drawings.

### BRIEF DESCRIPTION OF THE DRAWINGS

The embodiments can be understood in more detail by reading the subsequent detailed description in conjunction with the examples and references made to the accompanying drawings, wherein:
FIG. 1 is a schematic view showing the structure and operation of the wireless audiovisual information sharing system according to the present invention;
FIG. 2 is a flowchart showing the use of the wireless audiovisual information sharing system of the present invention in FIG. 1 to perform wireless audiovisual transmission method;
FIG. 3 is a schematic view showing the structure and operation of the wireless audiovisual information sharing system according to an embodiment of the present invention;
FIG. 4 is a flowchart showing the use of the wireless audiovisual information sharing system of an embodiment of the present invention in FIG. 3 to perform wireless audiovisual transmission method;
FIGs. 5A-5C are schematic views showing the use of the wireless audiovisual information sharing system of an embodiment of the present invention in FIG. 3.

### DETAILED DESCRIPTION OF THE DISCLOSED EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

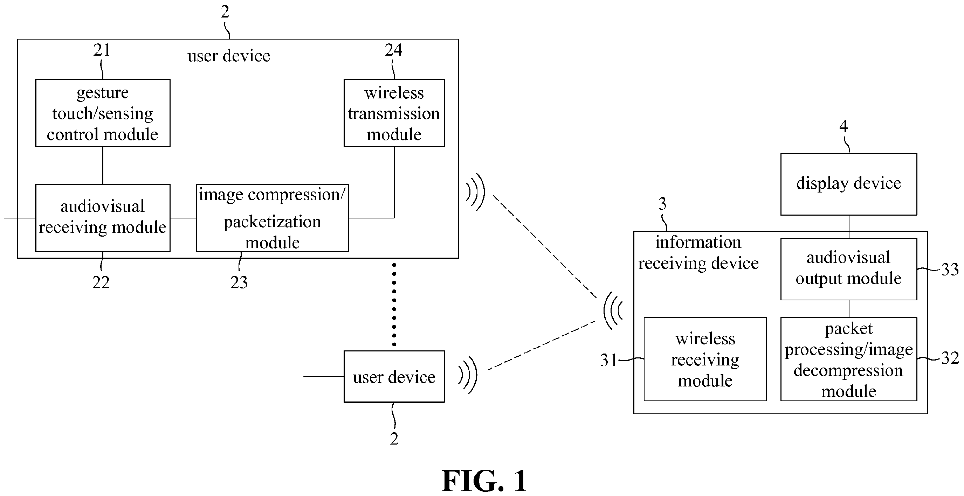

FIG. 1 is a schematic view showing the structure and operation of the wireless audiovisual information sharing system according to the present invention. As shown in FIG. 1, the wireless audiovisual information sharing system 1 comprises: at least one user device 2, each user device 2 receiving an audiovisual signal in compliance with at least one of HDMI and USB interfaces, and outputting the audiovisual signal in compliance with a wireless transmission protocol, such as an IEEE 802.11 communication protocol; and an information receiving device 3, to receive the audiovisual signals outputted by each user device 2, and selectively outputting the audiovisual signal from a user device 2 in compliance with HDMI and USB interfaces to a display device 4; wherein each user device 2 first is paired with the information receiving device 3 to select a transmission channel and the information receiving device 3 detects display coefficients of the display device 4 and transmits the display coefficients of the display device 4 to each user device 2; and each user device 2 adjusts compression ratio and frame rate of the audiovisual signal according to the display coefficients and transmission mode of the audiovisual signal to output the audiovisual signal.

The user device 2 comprises a gesture touch/sensing control module 21, an audiovisual receiving module 22, an image compression/packetization module 23, and a wireless transmission module 24.

Gesture touch/sensing control module 21: the gesture touch/sensing control module 21 senses user's gesture control to perform operation, such as, start/stop, pause/resume, menu, exit menu, and so on, on the user device 2.

Herein, when the user places and touches the light-transmissive outer casing (not shown) of the user device 2, the gesture touch/sensing control module 21 will sense the user's gesture touch, in other words, the user operates the user device 2 in a gesture touch manner and performs device operation to achieve the purpose of sharing the audiovisual information by touch-and-share.

In the present invention, touch-and-share is defined as the user uses gesture touch to manipulate and control the user device 2 to perform device operation to achieve using gesture touch to control the sharing of audiovisual information.

Audiovisual receiving module 22: the audiovisual receiving module 22 cooperates with the gesture touch/sensing control module 21, so that the user device 2 can perform operations, such as, start/stop, pause/resume, menu, exit menu, and so on, receives an audiovisual signal in compliance with at least one of HDMI and USB interfaces, and transmits the audiovisual signal to the image compression/packetization module 23.

Image compression/packetization module 23: after receiving the audiovisual signal from the audiovisual receiving module 22, the image compression/packetization module 23 performs compression and encoding on the audiovisual signal; the image compression/packetization module 23 transmits the compressed encoded audiovisual signal to the wireless transmission module 24.

Wireless transmission module 24: the wireless transmission module 24 transmits the compressed and encoded audiovisual signal in packets in accordance with the IEEE 802.11 protocol to the information receiving device 3.

The information receiving device 3 comprises a wireless receiving module 31, a packet processing/image decompression module 32, and an audiovisual output module 33.

Wireless receiving module 31: the wireless receiving module 31 of the information receiving device 3 receives the audiovisual signal in compressed and encoded packets in compliance with, for example, the IEEE 802.11 communication protocol, and transmits the received audiovisual signal to the packet processing/image decompression module 32.

Packet processing/image decompression module 32: the packet processing/image decompression module 32 performs packet processing on the received audiovisual signal, performs decompression on the audiovisual signals, and transmits the processed audiovisual signal to the audiovisual output module 33.

Audiovisual output module 33: the audiovisual output module 33 outputs the audiovisual signal in compliance with at least one of HDMI and USB interfaces to the display device 4. Herein, the wireless transmission architecture of the user device 2 and the information receiving device 3 is, for example, an IEEE802.11 type. Moreover, depending on the actual application, the information receiving device 3 can be configured to comprise an audio module of audio out and an HDMI switch module able to accept an external image source.

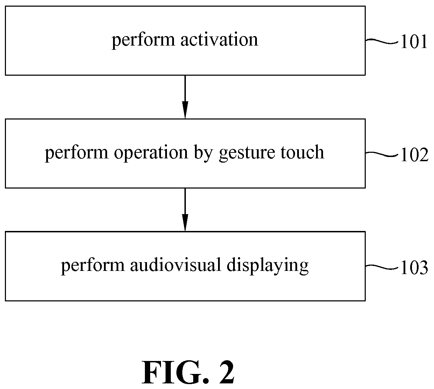

FIG. 2 is a flowchart showing the use of the wireless audiovisual information sharing system of the present invention in FIG. 1 to perform wireless audiovisual transmission method. As shown in FIG. 2, Step 101 is to perform an activation operation to confirm that each user device 2 of the at least one user end is connected to an information receiving device 3 of an information receiving end for performing audiovisual signals transmitting, wherein the audiovisual signal is a compression-encoded packet image signal; and then proceed to Step 102.

Step 102: performing an operation by gesture touch: an operation is performed on each user device 2 of the at least one user end, a user can use gesture touch to control each user device 2 of the at least one user end, to operate each user device 2, and proceed to Step 103.

Step 103: performing the displaying: the information receiving device 3 of the receiving end can receive the audiovisual signal outputted by each user device 2 of the at least one user end in a wireless manner, wherein if the information receiving device 3 of the receiving end receives an operation information of a user device 2 of the at least one user end, the information receiving device 3 decompresses the audiovisual signal outputted by the user device 2 of the user end, and transmits the decompressed audiovisual signal to a display device 4 for displaying, until the information receiving device 3 at the receiving end receives an operation information from another user device 2 of the user end, and then the information receiving device 3 of the receiving end performs decompression on the audiovisual signals outputted by the another user device 2 and transmits the decompressed audiovisual signal to the display device 4 for displaying, so that the users can share wireless audiovisual information by touch control.

Whether as shown in FIG. 1 or FIG. 2, the wireless audiovisual transmission method of the present invention is for providing real-time transmission of more than one audiovisual signal to a device according to a time usage sequence. The application of the technology is an environment where there is a need for many-to-one audiovisual transmissions, for example, multiple staffs participate in a briefing but only one person's audiovisual signals can be displayed.

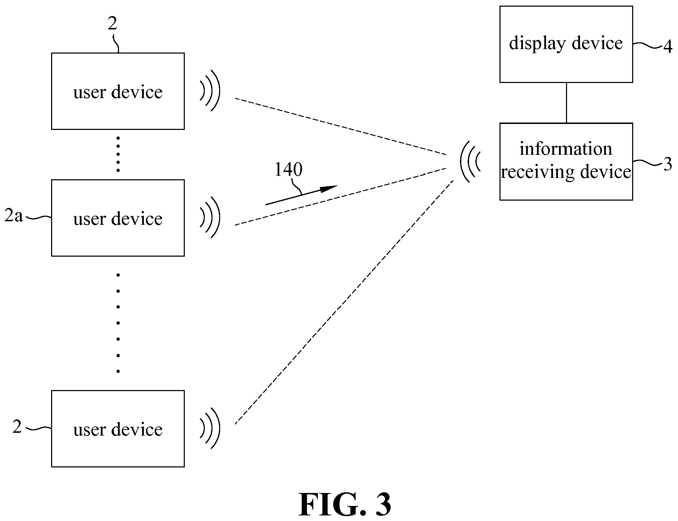

FIG. 3 is a schematic view showing the structure and operation of the wireless audiovisual information sharing system according to an embodiment of the present invention. As shown in FIG. 3, the information receiving device 3 of the receiving end wirelessly receives the audiovisual signal outputted by each user device 2 of the at least one user end, and selectively outputs the audiovisual signal of a user device 2a of the user end to a display device 4. The user of the user device 2a can operate the user device 2a with a gesture touch, and can perform the device operation 140.

The information receiving device 3 at the receiving end receives the device operation 140 of a user device 2a to output the audiovisual signal of the user device 2a to the display device 4; the information receiving device 3 of the receiving end receives the transmitted device operation 140 from the user device 2a, decompresses the audiovisual signal outputted by the user device 2a, and outputs the decompressed audiovisual signal to the display device 4 for displaying, until the information receiving device 3 of the receiving end receives the operation information transmitted by another user device 2, and then the information receiving device 3 of the receiving end performs decompression on the audiovisual signals outputted by the another user device 2 and transmits the decompressed audiovisual signal to the display device 4 for displaying, so that the users can share wireless audiovisual information by touch control.

The user device 2 comprises a gesture touch/sensing control module 21, an audiovisual receiving module 22, an image compression/packetization module 23, and a wireless transmission module 24.

Gesture touch/sensing control module 21: the gesture touch/sensing control module 21 senses user's gesture touch to perform operation on the user device 2a, generates an operation information of the device operation 140 to perform operation, such as, start/stop, pause/resume, menu, exit menu, and so on, on the user device 2a.

Herein, when the user places and touches the light-transmissive outer casing (not shown) of the user devices 2, 2a, the gesture touch/sensing control module 21 will sense the user's gesture touch, in other words, the user operates the user devices 2, 2a in a gesture touch manner and performs device operation to achieve the purpose of sharing the audiovisual information by touch-and-share.

Audiovisual receiving module 22: the audiovisual receiving module 22 cooperates with the gesture touch/sensing control module 21, so that the user device 2 can perform operations, such as, start/stop, pause/resume, menu, exit menu, and so on, receives an audiovisual signal in compliance with at least one of HDMI and USB interfaces, and transmits the audiovisual signal to the image compression/packetization module 23.

Image compression/packetization module 23: after receiving the audiovisual signal from the audiovisual receiving module 22, the image compression/packetization module 23 performs compression and encoding on the audiovisual signal, the image compression/packetization module 23 transmits the compressed encoded audiovisual signal to the wireless transmission module 24.

Wireless transmission module 24: the wireless transmission module 24 transmits the compressed and encoded audiovisual signal in packets in accordance with the IEEE 802.11 protocol to the information receiving device 3.

The information receiving device 3 comprises a wireless receiving module 31, a packet processing/image decompression module 32, and an audiovisual output module 33.

Wireless receiving module 31: the wireless receiving module 31 of the information receiving device 3 receives the audiovisual signal in compressed and encoded packets in compliance with, for example, the IEEE 802.11 communication protocol, and transmits the received audiovisual signal to the packet processing/image decompression module 32.

Packet processing/image decompression module 32: the packet processing/image decompression module 32 performs packet processing on the received audiovisual signal, performs decompression on the audiovisual signals, and transmits the processed audiovisual signal to the audiovisual output module 33.

Audiovisual output module 33: the audiovisual output module 33 outputs the audiovisual signal in compliance with at least one of HDMI and USB interfaces to the display device 4.

Herein, the wireless transmission architecture of the user devices 2, 2a and the information receiving device 3 is, for example, an IEEE802.11protocol type.

Moreover, depending on the actual application, the information receiving device 3 can be configured to comprise an audio module of audio out and an HDMI switch module able to accept an external image source.

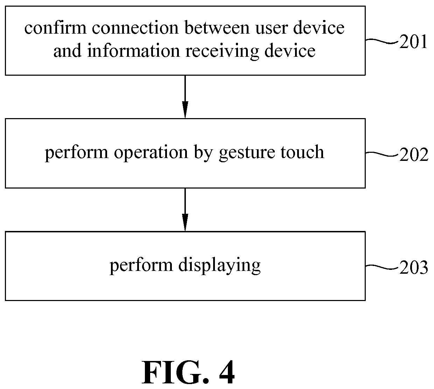

FIG. 4 is a flowchart showing the use of the wireless audiovisual information sharing system of an embodiment of the present invention in FIG. 3 to perform wireless audiovisual transmission method. A shown in FIG. 4, Step 201 is to perform an activation operation to confirm that each user device 2, 2a of the at least one user end is connected to an information receiving device 3 of a receiving end for performing audiovisual signals transmitting, wherein the audiovisual signal is a compression-encoded packet image signal; and then proceed to Step 202.

Step 202: performing an operation by gesture touch: an operation is performed on each user device 2, 2a of the at least one user end, a user can use gesture touch to control each user device 2, 2a of the at least one user end, to operate each user device 2, generate an operation information of the device operation 140 and proceed to Step 103.

Step 203: performing the displaying: the information receiving device 3 of the receiving end can receive the audiovisual signal outputted by each user device 2, 2a of the at least one user end in a wireless manner, wherein if the information receiving device 3 of the receiving end receives an operation information of a user device 2a of the at least one user end, the information receiving device 3 decompresses the audiovisual signal outputted by the user device 2a of the user end, and transmits the decompressed audiovisual signal to a display device 4 for displaying, until the information receiving device 3 at the receiving end receives an operation information from another user device 2 of the user end, and then the information receiving device 3 of the receiving end performs decompression on the audiovisual signals outputted by the another user device 2 and transmits the decompressed audiovisual signal to the display device 4 for displaying, so that the users can share wireless audiovisual information by touch control.

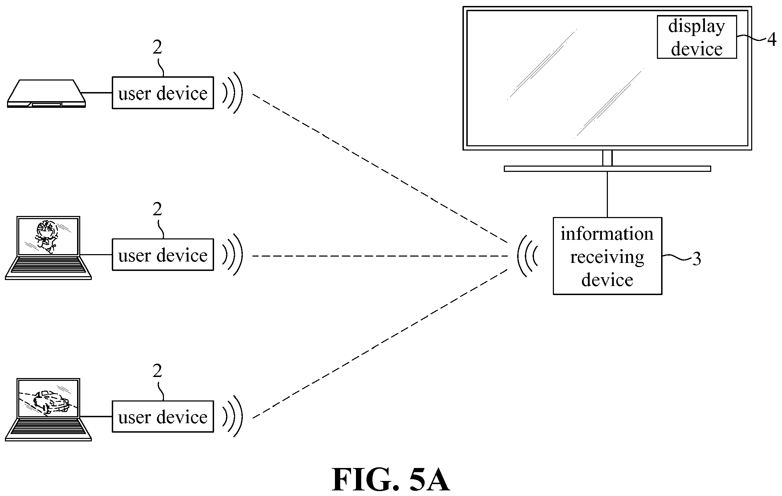

FIGs. 5A-5C are schematic views showing the use of the wireless audiovisual information sharing system of an embodiment of the present invention in FIG. 3. As shown in the figures, the user devices 2, 2a are connected respectively to a digital multi-function video disc player, a notebook computer, and so on, to output audiovisual signals, and the display device 4 is a panel display.

FIG. 5A shows the information receiving device 3 of the receiving end wirelessly receives the audiovisual signals of one of the user devices 2 connected to the transmitting end of the DVD player, the notebook computer, and so on, to a display device 4.

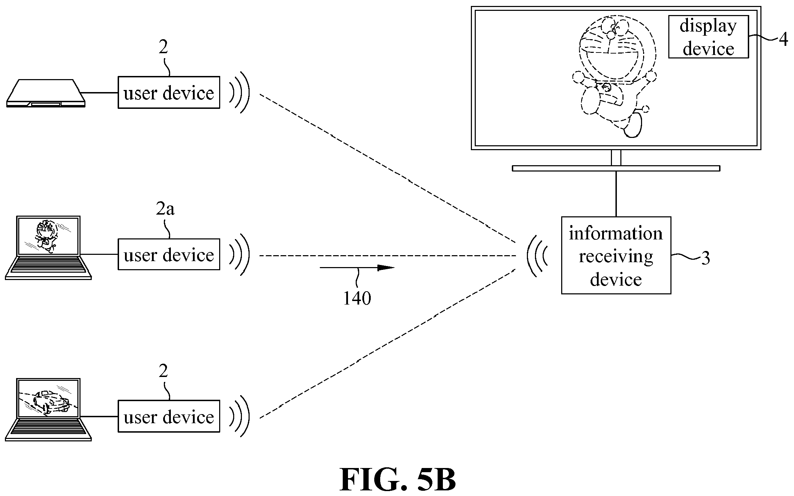

FIG. 5B shows the information receiving device 3 at the receiving end receives the device operation 140 of a user device 2a, and outputs the audiovisual signal of the user device 2a connected to the notebook computer to the display device 4.

Herein, the information receiving device 3 receives the audiovisual signal outputted from the user device 2a, wherein the information receiving device 3 receives the operation information 140 of the user device 2a, performs decompression on audiovisual signal outputted from the user device 2a, and outputs the decompressed audiovisual signal to a display device 4 for displaying on the display device 4.

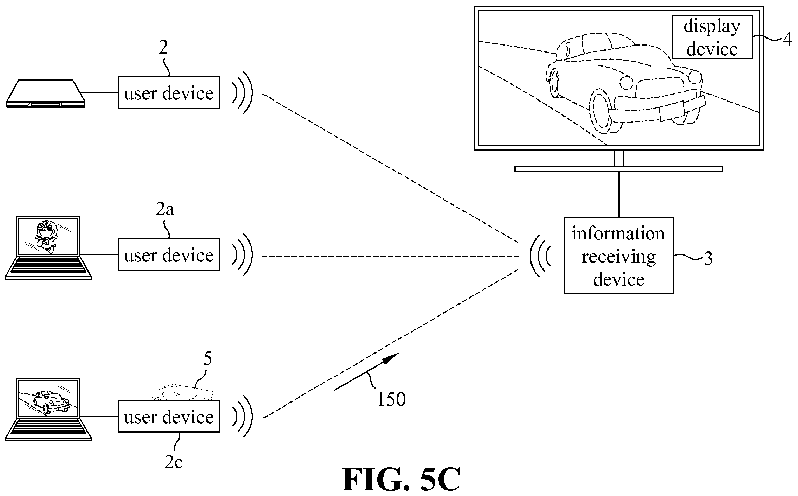

FIG. 5C shows after completing the operation on the user device 2a, the information receiving device 3 of the receiving end receives the operation information of the device operation 150 of the user device 2a.

Herein, the information receiving device 3 receives the operation information 150 of the user device 2c, and then performs decompression on audiovisual signal outputted from the another user device 2c, and outputs the decompressed audiovisual signal to a display device 4 for displaying on the display device 4 so that the users can share wireless audiovisual information by touch-and-share.

In actual implementation, the audiovisual signal may be, for example, an audio, an image, or an audiovisual program. As also shown in FIG. 5C, when the user places and touches the light-transmissive outer casing (not shown) of the user device 2c, the gesture touch/sensing control module 21 will sense the user's gesture touch, in other words, the user operates the user device 2c in a gesture touch manner and performs device operation to achieve the purpose of sharing the audiovisual information by touch-and-share.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A wireless audiovisual information sharing method, applicable to a conference environment, comprising the following steps:
performing an activation operation, to confirm that each user device of at least one user end being connected to an information receiving device of an information receiving end for performing audiovisual signals transmitting, wherein the audiovisual signal being a compression-encoded packet image signal;
performing an operation by gesture touch, at each user device of the at least one user end, a user using gesture touch to control each user device of the at least one user end to perform device operation;
performing audiovisual displaying: the information receiving device of the receiving end receiving an audiovisual signal outputted by each user device from the at least one user end in a wireless manner.

2. The wireless audiovisual information sharing method as claimed in claim 1, wherein if the information receiving device of the information receiving end receives an device operation of a user device of the at least one user end, the information receiving device decompresses the audiovisual signal outputted by the user device of the user end, and transmits the decompressed audiovisual signal to a display device for displaying, until the information receiving device receives an operation information from another user device of the at least one user end and then performs decompression on the audiovisual signals outputted by the another user device and transmits the decompressed audiovisual signal to the display device for displaying.

3. The wireless audiovisual information sharing method as claimed in claim 1, wherein based on the received device operation from a user device of the at least one user end and the priority of the audiovisual signal, the information receiving device of the receiving end decompresses the received audiovisual signal and transmits the decompressed audiovisual signal to the display device for displaying.

4. A wireless audiovisual information sharing method, applicable to a conference environment, comprising the following steps:
performing an activation operation, to confirm that each user device of at least one user end being connected to an information receiving device of an information receiving end for performing audiovisual signals transmitting, wherein the audiovisual signal being a compression-encoded packet image signal;
performing an operation by gesture touch, at each user device of the at least one user end, a user using gesture touch to control each user device of the at least one user end to perform device operation;
performing audiovisual displaying: the information receiving device of the receiving end receiving an audiovisual signal outputted by each user device from the at least one user end in a wireless manner; wherein, if the information receiving device of the information receiving end receives an device operation of a user device of the at least one user end, the information receiving device decompresses the audiovisual signal outputted by the user device of the user end, and transmits the decompressed audiovisual signal to a display device for displaying, until the information receiving device receives an operation information from another user device of the at least one user end and then performs decompression on the audiovisual signals outputted by the another user device and transmits the decompressed audiovisual signal to the display device for displaying, so that the users can share wireless audiovisual information by a touch-and-share manner.

5. A wireless audiovisual information sharing method, applicable to a conference environment, comprising the following steps:
an information receiving device of an information receiving end receiving an audiovisual signal outputted by each user device of at least one user end in a wireless manner; and selectively outputting one of the audiovisual signals outputted by each user device of at least one transmitting end to a display device;
wherein if the information receiving device of the information receiving end receiving a device operation of a user device of the at least one user end generated by a user with gesture touch, the information receiving device outputting the audiovisual signal outputted by the user device to the display device, until the information receiving device of the information receiving end receiving an operation information from another user device of the at least one user end.

6. A wireless audiovisual information sharing system, applicable to a conference environment, comprising:
at least one user device, each user device receiving an audiovisual signal in compliance with at least one of HDMI and USB interfaces, and outputting the audiovisual signal in compliance with IEEE 802.11 wireless transmission protocol; and
an information receiving device, to receive the audiovisual signals outputted by each user device, and selectively outputting the audiovisual signal from a user device in compliance with HDMI and USB interfaces to a display device.

7. The wireless audiovisual information sharing system as claimed in claim 6, wherein each user device is first paired with the information receiving device to select a transmission channel and the information receiving device detects display coefficients of the display device and transmitting the display coefficients of the display device to each user device; and each user device adjusts compression ratio and frame rate of the audiovisual signal according to the display coefficients and transmission mode of the audiovisual signal to output the audiovisual signal.

8. The wireless audiovisual information sharing system as claimed in claim 6, wherein the user device comprises:
a gesture touch/sensing control module, the gesture touch/sensing control module sensing user's gesture touch to perform operation on the user device and generating an operation information of the device operation;
an audiovisual receiving module, the audiovisual receiving module cooperates with the gesture touch/sensing control module, so that the user device performing start/stop, pause/resume, menu, and exit menu operations, receiving an audiovisual signal in compliance with at least one of HDMI and USB interfaces, and transmitting the audiovisual signal;
an image compression/packetization module, after receiving the audiovisual signal from the audiovisual receiving module, the image compression/packetization module performing compression and encoding on the audiovisual signal, and transmitting the compressed and encoded audiovisual signals; and
a wireless transmission module; the wireless transmission module transmitting the compressed and encoded audiovisual signal in packets in accordance with the IEEE 802.11 protocol to the information receiving device.

9. The wireless audiovisual information sharing system as claimed in claim 8, wherein the information receiving device comprises:
a wireless receiving module, the wireless receiving module receiving the audiovisual signal in compressed and encoded packets in compliance with the IEEE 802.11 communication protocol, and transmitting the received audiovisual signal;
a packet processing/image decompression module, the packet processing/image decompression module performing packet processing on the received audiovisual signal, performing decompression on the audiovisual signals, and transmitting the processed audiovisual signal;
an audiovisual output module, the audiovisual output module outputting the audiovisual signal in compliance with at least one of HDMI and USB interfaces to the display device.

10. The wireless audiovisual information sharing system as claimed in claim 9, wherein the wireless transmission architecture of the user device and the information receiving device is at least one of 802.11 communication protocol.

## Amended claims

### Amended claims in accordance with Rule 137(2) EPC.

1. A wireless audiovisual information sharing system (1), applicable to a conference environment, comprising:
at least one user device (2, 2a, 2c) having at least one of HDMI and USB interfaces for connection to a separate user unit on which is stored audiovisual information, each user device being configured to receive an audiovisual signal corresponding to the stored audiovisual information from the separate user unit by way of the at least one HDMI/USB interface, the at least one user device being configured to output the audiovisual signal in compliance with IEEE 802.11 wireless transmission protocol; and
an information receiving device (3) having an HDMI or USB interface with a display device (4), the information receiving device being configured to receive the audiovisual signals outputted by each user device (2, 2a, 2c), and to selectively output the audiovisual signal from a user device by way of the HDMI/USB interface to the display device.

2. The wireless audiovisual information sharing system (1) as claimed in claim 1, wherein each user (2, 2a, 2c) device is paired with the information receiving device to select a transmission channel and the information receiving device (3) is configured to detect display coefficients of the display device (4) and to transmit the display coefficients of the display device to each user device; and each user device is configured to adjust compression ratio and frame rate of the audiovisual signal according to the display coefficients and transmission mode of the audiovisual signal to output the audiovisual signal.

3. The wireless audiovisual information sharing system (1) as claimed in claim 1, wherein each user device (2, 2a,, 2c) comprises:
a gesture touch/sensing control module (21), the gesture touch/sensing control module being configured to sense a user's gesture touch and to perform operation on the user device and to generate an operation information of the device operation;
an audiovisual receiving module (22), the audiovisual receiving module being configured to cooperate with the gesture touch/sensing control module (21), so that the user device (2, 2a, 2b) can perform start/stop, pause/resume, menu, and exit menu operations, and being further configured to receive an audiovisual signal in compliance with at least one of the HDMI and USB interfaces, and to transmit the audiovisual signal;
an image compression/packetization module (23), configured to receive the audiovisual signal from the audiovisual receiving module (22), and to perform compression and encoding on the audiovisual signal, and to transmit the compressed and encoded audiovisual signals; and
a wireless transmission module (24); the wireless transmission module being configured to transmit the compressed and encoded audiovisual signal in packets in accordance with the IEEE 802.11 protocol to the information receiving device (3).

4. The wireless audiovisual information sharing system (1) as claimed in claim 3, wherein the information receiving device (3) comprises:
a wireless receiving module (31), the wireless receiving module being configured to receive the audiovisual signal in compressed and encoded packets in compliance with the IEEE 802.11 communication protocol, and to transmit the received audiovisual signal;
a packet processing/image decompression module (32), the packet processing/image decompression module being configured to perform packet processing on the received audiovisual signal, to perform decompression on the audiovisual signals, and to transmit the processed audiovisual signal;
an audiovisual output module (33), the audiovisual output module being configured to output the audiovisual signal in compliance with at least one of HDMI and USB interfaces to the display device (4).

5. The wireless audiovisual information sharing system (1) as claimed in claim 4, wherein the wireless transmission architecture of the user device (2, 2a, 2c) and the information receiving device (3) is at least one of 802.11 communication protocol.
